# EUROPÄISCHE PATENTANMELDUNG

(11) **EP 0 773 556 A2**
(43) Veröffentlichungstag der Anmeldung: **14.05.1997**
(21) Anmeldenummer: 96116538.8
(22) Anmeldetag: 16.10.1996
(51) Int. Cl.: H01B 7/00

(54) **Kabelbaum**

(30) Priorität: 20.10.1995 DE 19539188
(71) Anmelder: Delphi Automotive Systems Deutschland GmbH, D-42369 Wuppertal (DE)
(72) Erfinder: Krappel, Alfred, Dipl.-Ing. FH, 85737 Ismaning (DE); Gröbmair, Maximilian, 83623 Dietramszell (DE); Fürch, Rudolf, 81241 München (DE)
(74) Vertreter: Denton, Michael John

(57) **Zusammenfassung**

Bei einem Kabelbaum für Kraftfahrzeuge mit einer Umhüllung aus flexiblem Material ist die Umhüllung als Hohlrohr ausgebildet, das in regelmäßigen Abständen Öffnungen zur Ausleitung einzelner Kabel besitzt.

## Beschreibung

Die Erfindung bezieht sich auf einen Kabelbaum mit einer Umhüllung aus flexiblem Material.

Die Anforderungen an einen Kabelbaum beispielsweise bei Kraftfahrzeugen bestehen heute darin, universell einsetzbar und montagefreundlich zu sein. Unter letzterem ist ein Mehrfaches zu verstehen. Zum einen muß es möglich sein, mit möglichst geringem Fertigungsaufwand die Kabel innerhalb des Kabelbaumes anzuordnen. Zweitens ist der Kabelbaum auch bei ungünstigen und verwinkelten Einbauverhältnissen ohne großen Aufwand und dennoch geschützt im Kraftfahrzeug unterzubringen. Drittens muß es möglich sein, einzelne Kabel sowohl bei der Herstellung des Kabelbaumes vor der Montage des Kabelbaumes, d. h. außerhalb des Kraftfahrzeuges als auch im eingebauten Zustand mit möglichst geringem Aufwand ein- und auszuleiten.

Es ist bekannt, für einen Kabelbaum der eingangs genannten Art die Umhüllung als Wickelband auszugestalten (DE 40 26 718 C2). Ein derartiger Kabelbaum erhält seine Stabilität bzw. Flexibilität durch die Eigenstabilität der Kabel und die Art der Umhüllung. Ein klebendes Wickelband z. B. wirkt versteifend und erschwert die Verlegung des Kabelbaumes bei verwinkelter Einbaulage. Dadurch läßt sich die Stabilität des Kabelbaumes nicht variieren. Die Elastizität nimmt mit steigender Anzahl der verlegten Kabel ab.

Aus der DE 31 38 244 A1 ist es bekannt, die Umhüllung als spiralförmig aufgewickeltes Hohlrohr auszubilden. Das Hohlrohr besitzt zwar selbst aufgrund der Eigenstabilität eine Tragefunktion. Die Ausleitung von einzelnen Kabeln im Verlauf des Kabelbaumes ist dabei jedoch nicht möglich.

Der Erfindung liegt die Aufgabe zugrunde, einen Kabelbaum der eingangs genannten Art zu schaffen, der die genannten Bedingungen erfüllt und der sich darüber hinaus durch geringe Gestehungskosten auszeichnet.

Die Erfindung löst diese Aufgabe durch die kennzeichnenden Merkmale des Patentanspruchs 1.

Wie bei der DE 31 38 244 A1 trägt das Hohlrohr selbst zur Stabilität des Kabelbaums bei. Die Stabilität und Elastizität des Kabelbaums ist, bedingt durch die Eigenstabilität des Hohlrohrs entsprechend des in jeweiliger konstruktiver Ausgestaltung variierbar und den entsprechenden Einbauverhältnissen anpaßbar. Mit Hilfe der Öffnungen lassen sich einzelne Kabel praktisch an beliebiger Stelle im Verlauf des Kabelbaumes ausleiten. Dieses kann sowohl vor als auch nach dem Einbau in das Kraftfahrzeug erfolgen. Das Hohlrohr selbst kann als Meterware gefertigt werden und ist daher kostengünstig in der Herstellung. Bedingt durch die weiterhin bestehende Gleitfähigkeit der Kabel relativ zueinander und relativ zur Umhüllung gestaltet sich die Verlegung des kompletten Kabelbaumes vor Ort mühelos.

Je nach Anwendungsfall kann die konstruktive Ausführung des Hohlrohrs verschieden sein. So ist es möglich, das Hohlrohr in sich geschlossen auszubilden. Die Einbringung der Kabel kann dabei nur von den Enden des Hohlrohrs her geschehen. Demgegenüber ergibt sich eine vorteilhafte Weiterbildung durch die Merkmale des Patentanspruchs 2. Damit ist es möglich, einzelne Kabel auch nachträglich und sogar bei eingebautem Zustand des Kabelbaumes in das Hohlrohr einzuführen. Hierzu ist es lediglich erforderlich, die beiden überlappenden Endteile durch und mit dem Kabel auseinander zu drücken und das Kabel in das Innere des Hohlrohrs einzuschieben. Bedingt durch die offene Struktur ist es auch möglich, dieses Kabel dann nur abschnittsweise innerhalb des Hohlrohrs verlaufen zu lassen und das Kabel mit angeschlagenen Kontaktteilen wie Stecker, Buchsen und dgl. seitlich in das Hohlrohr einzuführen.

Die offene Struktur des Hohlrohrs kann auf verschiedene Weise realisiert werden. In den Patentansprüchen 3 bis 8 sind hierzu verschiedene konstruktive Möglichkeiten angegeben. Diese können einzeln oder in Verbindung miteinander entsprechend den jeweiligen Einbau- und Montageverhältnissen gewählt und kombiniert werden.

Anhand der Zeichnung ist die Erfindung weiter erläutert. Es zeigt
- Fig. 1: das Grundprinzip des erfindungsgemäßen Kabelbaums
- Fig. 2 - 8: verschiedene konstruktive Ausführungsformen basierend auf dem Grundprinzip von Fig. 1.

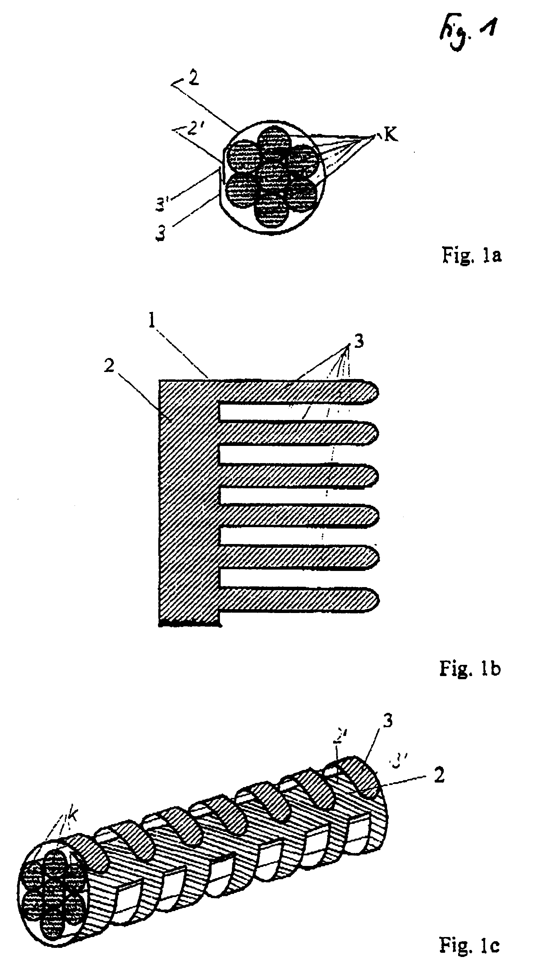

Der in Fig. 1a im Querschnitt gezeigte Kabelbaum besteht aus einzelnen Kabeln K, die elektrisch voneinander isoliert sind und innerhalb eines Hohlrohrs 1 verlaufen, das in Fig. 1b in der Abwicklung gezeigt ist.

Das Hohlrohr 1 besitzt einen kammartigen Aufbau mit einem durchlaufenden Längssteg 2 und quer zur Richtung der Kabel verlaufenden Leitersprossen 3. Das Hohlrohr 1 besteht aus elastischem Material. Die Leitersprossen 3 sind eingerollt und überlappen den Längssteg 2 im Bereich der offenen Endteile 2' und 3'. Bedingt durch die offene Bauart ist es möglich, die Kabel K in Längsrichtung als auch seitlich in das Hohlrohr 1 einzuführen. Hierzu werden die Endteile 2' und 3' durch das einzuführende Kabel auseinandergedrückt und geben den Raum frei für den Eintritt des Kabels. Dieses läßt sich dann seitlich in das Innere des Hohlrohrs 1 einschieben. Die beiden Endteile 2' und 3' gelangen dann aufgrund ihrer Eigenelastizität wieder zur Auflage aneinander und verschließen das Hohlrohr 1. Die Elastizität des Kabelbaumes ist zusätzlich zur Eigenelastizität der Kabel K durch die Elastizität des Hohlrohrs 1 bestimmt. Dessen Elastizität kann durch unterschiedliche konstruktive Maßnahmen variiert werden. Diese Maßnahmen sind im Detail in den folgenden Figuren gezeigt.

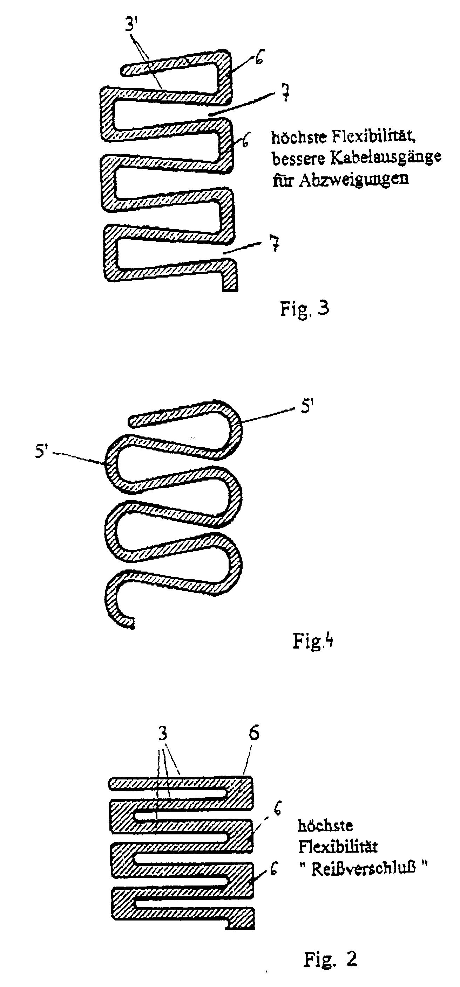

Die Ausführungsform von Fig. 2 zeichnet sich durch höchste Flexibilität aus. Die Leitersprossen 3 und die Verbindungsstege 6 ergeben in der Abwicklung eine mäanderförmige Form. Da sich aufeinanderfolgende Stege im Bereich der dazwischenliegenden Leitersprossen teilweise überlappen, ergibt sich zusätzlich eine besonders stabile Ausführungsform.

Beim Ausführungsbeispiel von Fig. 3 sind die aufeinanderfolgenden Leitersprossen 3' abwechselnd gegeneinander geneigt und die Verbindungsstege 6 verlaufen parallel zueinander. Diese Ausführungsform besitzt eine besonders hohe Flexibilität. Die Öffnungen 7 für die Kabelausgänge sind gegenüber den vorherigen Ausführungsformen vergrößert und lassen auch den Austritt mehrerer Kabel an derselben Stelle zu.

Bei Fig. 4 sind die Verbindungsstege 5' abgerundet. Diese Ausführungsform ermöglicht eine Verlegung des Kabelbaumes auch bei kleinen Radien.

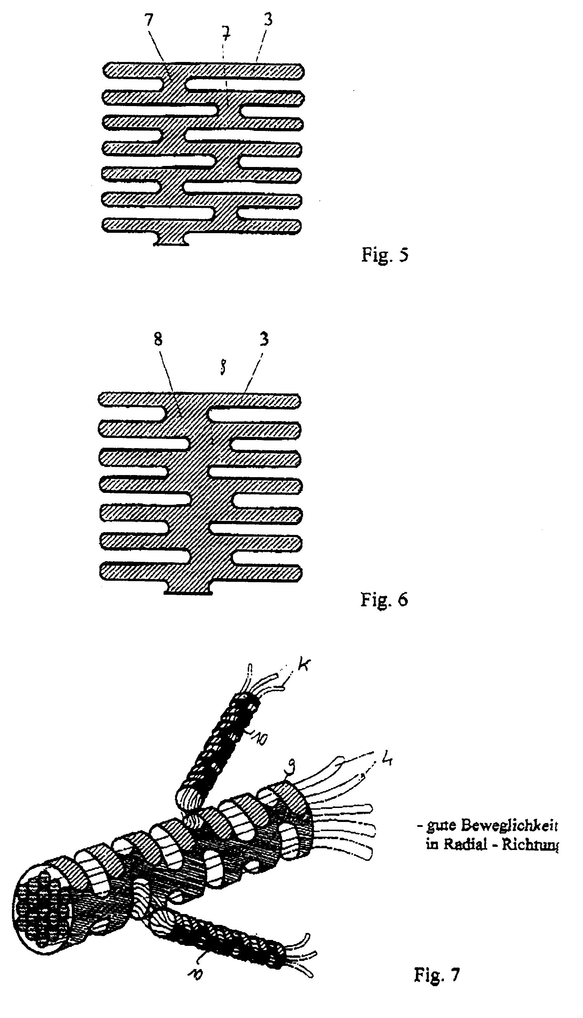

Beim Ausführungsbeispiel von Fig. 5 sind die zwischen den einzelnen Leitersprossen 3 vorgesehenen Stege 7 gegeneinander versetzt. Auch diese Ausführungsform erweist sich als sehr flexibel. Stabiler demgegenüber ist die Ausführung von Fig. 6. Dabei sind die Stege 8 breiter und gehen ineinander über. Der Aufbau eines derartigen Kabelbaumes 9 ist in Fig. 7 gezeigt. Dabei sind seitlich abzweigende Kabelbäume 10 mit einem Hüllrohr versehen, das einen kleineren und der Zahl der gehaltenen Kabel K entsprechenden Durchmesser besitzt.

Allen Ausführungsformen gemeinsam ist, daß die Kabel innerhalb des Hohlrohrs durch dessen Eigenstabilität gehalten sind und andererseits relativ zueinander und relativ zum Hohlrohr verschiebbar sind. Die Ausleitung einzelner Kabel kann an beliebiger Stelle vorgenommen werden. Bei den in den Ausführungsbeispielen dargestellten offenen Strukturen können die Kabel an beliebiger Stelle ausgeleitet werden. Ein derartiger Kabelbaum ist universell verwendbar und z. B. für den Einsatz in Kraftfahrzeugen besonders geeignet.

## Patentansprüche

1. Kabelbaum für Kraftfahrzeuge mit einer Umhüllung aus flexiblem Material, dadurch gekennzeichnet, daß die Umhüllung als Hohlrohr (1) ausgebildet ist, das in regelmäßigen Abständen Öffnungen zur Ausleitung einzelner Kabel K besitzt.

2. Kabelbaum nach Anspruch 1, dadurch gekennzeichnet, daß das Hohlrohr 1 im Querschnitt kreisförmig mit sich überlappenden offenen Endteilen (2', 3') ist.

3. Kabelbaum nach Anspruch 2, dadurch gekennzeichnet, daß das Hohlrohr in der Abwicklung eine Struktur aus quer zur Längsrichtung des Kabelbaumes verlaufenden Leitersprossen 3 besitzt, die miteinander verbunden sind.

4. Kabelbaum nach Anspruch 3, dadurch gekennzeichnet, daß die Leitersprossen durch Längsstege (2, 5', 6, 7, 8) miteinander verbunden sind.

5. Kabelbaum nach Anspruch 4, dadurch gekennzeichnet, daß die Längsstege (7, 8) gegeneinander versetzt sind.

6. Kabelbaum nach Anspruch 5, dadurch gekennzeichnet, daß die Leitersprossen (3) und Stege (6) zu einer mäanderförmigen Struktur zusammengesetzt sind.

7. Kabelbaum nach einem der Ansprüche 3 bis 6, dadurch gekennzeichnet, daß die Leitersprossen (3') abwechselnd gegeneinander geneigt sind.
